# EUROPEAN PATENT APPLICATION

(11) **EP 2 808 111 A1**
(43) Date of publication of application: **03.12.2014**
(21) Application number: 14162628.3
(22) Date of filing: 31.03.2014
(51) Int. Cl.: B23B 47/28, B23Q 3/12

(54) **A production jig for machining fitting elements**

(30) Priority: 29.05.2013 PL 40414313
(71) Applicant: Bomar S.A., 41-400 Myslowice (PL)
(72) Inventor: Niemczyk, Piotr, 43-230 Gocza kowice Zdrój (PL); Niemczyk, Pawe, 43-600 Jaworzno (PL); Kaczmarek, Krzysztof, 41-215 Sosnowiec (PL)
(74) Representative: Korga, Leokadia

(57) **Abstract**

The subject of the invention is a production jig for machining fitting elements produced from the impression die forgings. According to the invention the characteristic feature of the production jig for machining fitting elements produced from the impression die forgings is that it consists of a rigid body (1) equipped with a fluted pate clamp (2), an arbor (3) for fixing the body (1) with machined element (6) in the self-adjusting grip and at least three press bolts (4) located at the arbor (3) side while on the opposite side there are holes (5) in the body (1).

## Description

The subject of the invention is a production jig for machining fitting elements produced from the impression die forgings.

According to the common technical procedures fitting elements such as crosses, T-pieces, Y-pieces or elbows produced from the impression die forgings are jigged in self-adjusting grip of the machining centre. Due to geometrical tolerance the impression die forgings required a setup while being jigged within the self-adjusting grip. The setup itself is a time consuming process.

The basic aim of the invention is constructing a universal jig for fixing a variety shapes of fitting elements such as crosses, T-pieces, Y-pieces or elbows produced from the impression die forgings that would guarantee a required repeatability and preciseness of the machining process.

According to the invention the characteristic feature of the production jig for machining fitting elements produced from the impression die forgings is that it consists of a rigid body equipped with a fluted pate clamp, an arbor for fixing the body with machined element in the self-adjusting grip and at least three press bolts located at the arbor side while on the opposite there are holes in the body.

The advantageous feature of the jig is that the holes for element machining are made in pairs.

The advantageous feature of the jig is that there are four press bolts in the body.

The basic advantage of the invention is providing repeatability of semi-finished product fixing - impression die forgings with the use of universal jig of high rigidity. The jig is set up and fixed in the self-adjusting grip of the machining centre. The jig provides access to all machined surfaces. An additional advantage is shortening the machining times preserving at the same time required quality of the produced element followed with high productivity. The fixing pattern provides access to all machining surfaces.

The subject of the invention is presented as an exemplary model in the following:

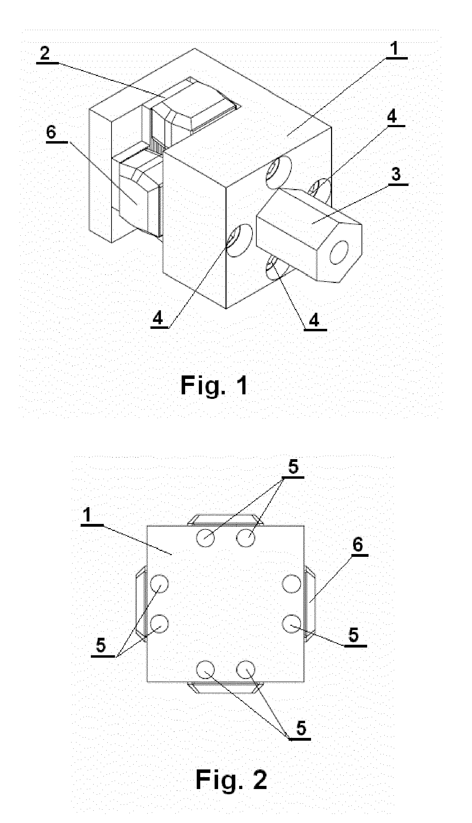

Fig 1. Presents the axonometric view of the jig
Fig.2. Presents the rear view of the jig

The following example of the device production does not limit the tool chuck application possibilities.

### The example of the device production

The production jig for machining fitting elements produced from the impression die forgings consists of a rigid body 1 equipped with a fluted pate clamp 2, an arbor 3 for fixing the body 1 with machined element 6 in the self-adjusting grip and four press bolts 4 located at the arbor side 3. On the opposite side there are holes 5 in the body 1 made in pairs. The holes 5 are technological holes for making staple holes. The jig enables to fix crosses, T-pieces, Y-pieces or elbows in it.

## Claims

1. The production jig for machining fitting elements produced from the impression die forgings wherein it consists of a rigid body 1 equipped with a fluted pate clamp 2, an arbor 3 for fixing the body 1 with machined element 6 in the self-adjusting grip and at least three press bolts 4 located at the arbor 3 side while on the opposite side there are holes 5 in the body 1.

2. The production jig for machining fitting elements, according to the claim no.1 characteristic by the fact that the holes 5 for element machining 6 are made in pairs.

3. The production jig for machining fitting elements, according to the claim no.1 characteristic by the fact that there are four press bolts 4 in the body 1.
